# EUROPÄISCHE PATENTSCHRIFT

(11) **EP 3 038 961 B1**
(45) Veröffentlichungstag und Bekanntmachung des Hinweises auf die Patenterteilung: **25.03.2020**
(21) Anmeldenummer: 14757845.4
(22) Anmeldetag: 27.08.2014
(51) Int. Cl.: B65G 65/44, B65G 65/46

(54) **DOSIERVORRICHTUNG MIT VORRATSBEHÄLTER UND AUSTRAGSVORRICHTUNG**
METERING DEVICE WITH STORAGE CONTAINER AND DISCHARGE DEVICE
DISPOSITIF DE DOSAGE POURVU D'UN CONTENANT DE STOCKAGE ET D'UN DISPOSITIF DISTRIBUTEUR

(30) Priorität: 30.08.2013 DE 102013014375
(43) Veröffentlichungstag der Anmeldung: 06.07.2016
(73) Patentinhaber: Schenck Process Europe GmbH, 64293 Darmstadt (DE)
(72) Erfinder: SCHWEIZER, Peter, 63225 Langen (DE)
(86) Internationale Anmeldenummer: PCT/EP2014/002339
(87) Internationale Veröffentlichungsnummer: WO 2015/028150

(56) Entgegenhaltungen:
- AU-B2- 531 044
- FR-A1- 2 635 314
- JP-U- S6 436 325
- US-A- 3 100 052

## Beschreibung

Die vorliegende Erfindung betrifft eine Dosiervorrichtung mit einem Vorratsbehälter und einer Austragsvorrichtung gemäß dem Oberbegriff des Patentanspruchs 1. Austragsvorrichtungen mit Fördervorrichtungen werden in Dosiereinrichtungen eingesetzt, um ein Fördergut aus einem Vorratsbehälter abzuziehen und einem nachgeschalteten Prozess zuzuführen. Derartige Dosiervorrichtungen für Schüttgut mit Vorratsbehältern und Austragsvorrichtungen sind beispielsweise aus der DE10 2007 055 566 A1 oder der DE 10 2011 110 960 A1 bekannt. Die Vorratsbehälter sind üblicherweise auf dem Boden, einer Unterkonstruktion, einem Rahmen oder einem Gerüst fest fixiert, während die zugehörigen Austragvorrichtungen an dem Vorratsbehälter oder auf einer Unterkonstruktion gelagert oder befestigt sind. Zur Anpassung an örtliche Gegebenheiten werden üblicherweise Fördereinrichtungen unterschiedlicher Länge zur Überbrückung unterschiedlicher horizontaler Distanzen eingesetzt.

Dies bedeutet, dass bei Vorgabe neuer, oder Änderung bestehender örtlicher Gegebenheiten die Fördereinrichtung oder zumindest eine Komponente der Fördereinrichtung ausgetauscht, ersetzt oder angepasst werden muss. Je nach Art der Fördereinrichtung erfordert dies häufig eine Anpassung und Neuabstimmung der gesamten Austragsvorrichtung, was mit einem erheblichen Aufwand verbunden ist. Die AU 531 044 B2 offenbart beispielsweise eine Dosiervorrichtung, bei der eine Austragsvorrichtung schwenkbar im Bereich der Auslauföffnung eines auf Stützen gelagerten Vorratsbehälters angeordnet ist, so dass diese in einem Radius zwischen den feststehenden Stützen horizontal und vertikal verschwenkt werden kann, um unterschiedlichen Abgabestellen bedienen zu können.

Aus dem Stand der Technik ist zudem die US 3 100 052 A bekannt, die eine gattunsgemäße Dosiereinrichtung offenbart, bei der eine Austragvorrichtung drehbar an einer exzentrisch zu einer Mittelachse des Vorratsbehälters angeordneten Auslauföffnung befestigt Ist. Dadurch wird die Abwurflänge der Dosiereinrichtung in einer Richtung maximiert und in der entgegen gesetzten Richtung minimiert.

Weiterhin zeigt die JP S64 36325 U eine Dosiervorrichtung, die eine ausfahrbare und im ausgefahrenen Zustand verschwenkbare Austragsvorrichtung aufweist. Dadurch können unterschiedlichen Abwurflängen auf einer Abwurfseite der Dosiervorrichtung realisiert und verschiedene auf einem begrenzten Radius um den Drehpunkt der Austragsvorrichtung liegende Abgabestellen erreicht werden.

Vor diesem Hintergrund stellt sich die Aufgabe, eine Dosiereinrichtung bereitzustellen, die bezüglich Ihrer Anpassung an unterschiedliche geometrischen Gegebenheiten verbessert ist.

Diese Aufgabe wird durch eine Dosiervorrichtung mit den Merkmalen des Patentanspruchs 1 gelöst. Vorteilhafte Weiterbildungen sind Gegenstand der abhängigen Ansprüche und in der Beschreibung enthalten.

Mit der Erfindung wird eine Dosiervorrichtung mit einem Vorratsbehälter, der eine Einlauföffnung, eine lotrechte Mittelachse und eine Auslauföffnung aufweist, und einer Austragsvorrichtung, die eine Fördervorrichtung und einen Antrieb für die Fördervorrichtung umfasst, bereitgestellt. Die Fördervorrichtung weist dabei eine Aufgabe- und eine Abgabestelle auf, die mit einem Abstand C zueinander angeordnet sind. Hierbei korrespondiert die Auslauföffnung des Vorratsbehälters mit der Aufgabestelle der Fördervorrichtung. Dabei ist es unerheblich, weichen Querschnitt der Vorratsbehälter aufweist und ob dieser Querschnitt symmetrisch zur Mittelachse ist. Unter Mittelachse wird dabei die Achse verstanden, die lotrecht durch einen Punkt innerhalb der Querschnittkontur der Vorratsbehältereinlaufebene verläuft. Erfindungsgemäß ist die Austragsvorrichtung um eine Auslaufachse der Auslauföffnung des Vorratsbehälters verdrehbar vorgesehen, wobei die Auslaufachse in einem Abstand B zur Mittelachse des Vorratsbehälters angeordnet ist.

Da Dosiervorrichtungen häufig in Anlagen mit beschränkten räumlichen Verhältnissen zum Einsatz kommen, werden bei Änderungen der Prozesse entsprechende Anpassungen der Dosiervorrichtungen erforderlich. Dadurch dass die Austragsvorrichtung der erfindungsgemäßen Dosiervorrichtung relativ zum Vorratsbehälter verdreht werden kann, besteht die Möglichkeit ohne konstruktive Veränderung der Einzelkomponenten eine Anpassung an die örtlichen Gegebenheiten zu erreichen. Der Abstand C der Aufgabestelle zur Abgabestelle der Fördervorrichtung und der Abstand B von der Auslaufachse der Auslauföffnung zur Mittelachse des Vorratsbehälters bleiben jeweils konstant. Die Abgabestelle der Fördereinrichtung kann durch die Verdrehung der Austragvorrichtung beliebig räumlich orientiert werden, so dass bei gleichbleibenden Komponenten eine große geometrische Flexibilität erreicht werden kann.

Durch Verdrehung der Dosiervorrichtung insgesamt und der relativ vom Vorratsbehälter drehbar angeordneten Austragvorrichtung kann die Abgabestelle der Fördervorrichtung in einer Kreisringebene A, die senkrecht zur Mittelachse des Vorratsbehälters verläuft, variabel angeordnet werden. Die Kreisringebene weist dabei in Abhängigkeit von den vorgenannten Komponenten eine Fläche A = π ^{∗} ((C+B)²-(C-B)²) auf. Zusätzlich ist der Vorratsbehälter innerhalb der Dosiereinrichtung drehbar gelagert. Der Vorteil ergibt sich daraus, dass etwaige Versorgungs- oder Signalleitungen von und zur Dosiervorrichtung nicht verlegt werden müssen.

Welche Komponente der Dosiervorrichtung zum Erreichen einer gewünschten Position relativ zu den übrigen Komponenten verdreht wird, ist dabei unter anderem von der Art der Fördervorrichtung und der zugehörigen Antriebsvorrichtung sowie deren Anordnung zueinander abhängig.

Während Dosiervorrichtungen nach dem Stand der Technik eine durch ihre Komponenten definierte Abwurflänge aufweisen, die sich üblicherweise aus dem Abstand der Abgabestelle der Fördervorrichtung zur Mittelachse des Vorratsbehälters ergibt, ist auch die Abwurflänge der erfindungsgemäßen Dosiervorrichtung variabel einstellbar. Hierbei ist jede Abwurflänge x, die zwischen einem maximalen Wert x1=C+B und einem minimalen Wert x2=C-B liegt, realisierbar.

Für die konstruktive Ausgestaltung der Dosiervorrichtung sind dabei in Abhängigkeit von den räumlichen Gegebenheiten und den Prozessbedingungen mehrere Varianten denkbar. Zum einen kann die Austragsvorrichtung am Vorratsbehälter direkt gelagert sein indem sie beispielweise hängend an diesem befestigt ist. Alternativ kann die Austragsvorrichtung stehend unterhalb des Vorratsbehälters angeordnet sein oder auf einer Konsole befestigt werden. Unter einer Konsole ist dabei eine Art Bühne oder Hilfskonstruktion zu verstehen, die dafür vorgesehen ist die Austragvorrichtung relativ zum Vorratsbehälter zu positionieren und dabei von dem eigentlichen Untergrund, Fundament oder Gerüst für die Dosiervorrichtung getrennt ist.

Vorteilhafterweise weist eine derartige Konsole eine Fläche auf, die im Wesentlichen der lotrechten Projektionsfläche des Vorratsbehälters entspricht.

Die Ausführungsform der Dosiervorrichtung ist dabei nicht auf eine bestimmte Austragsvorrichtung festgelegt. Je nach Art des zu dosierenden Materials oder des Schüttguts sind unterschiedliche Fördervorrichtungen und Antriebe und dementsprechend auch unterschiedliche Neigungen der Fördervorrichtungen gegenüber einer Horizontalen denkbar. Gemäß einer vorteilhaften Ausführungsform der Dosiervorrichtung kann die Fördervorrichtung der Austragsvorrichtung beispielsweise als Förderschnecke vorgesehen sein. Dabei ist es nicht von Bedeutung, ob es sich um eine Förderschnecke mit Einzeldosierschnecke und Doppeldosierschnecke/ doppelwellige Dosierschnecke handelt und ob diese in einem Schneckentrog mit oder ohne Trogabdeckung angeordnet ist.

Gemäß einer weiteren vorteilhaften Ausführungsform der Erfindung kann die Fördervorrichtung der Austragsvorrichtung als Förderrinne und der Antrieb der Austragsvorrichtung als Vibrationsantrieb vorgesehen sein, der die Förderinne in Schwingung versetzt. Diese Austragsvorrichtungen sind besonders für frei fließende oder rieselfähige Schüttgüter wie Granulate oder Griese geeignet. Austragsvorrichtungen dieser Bauart bilden ein Zwei-Massen-Schwingsystem mit einer spezifischen Eigenresonanz. Die Auswahl und Anordnung des Antriebes der Förderrinne beschleunigt bei Vibrationsbewegung das Schüttgut mit einer vertikalen Komponente nach oben und mit einer horizontalen Komponente in Förderrichtung, wodurch es zu der gewünschten Förderwirkung kommt (Mikrowurfprinzip). Zur Ansteuerung des Systems ist es erforderlich, dass die Resonanzfrequenz des Systems in bestimmten Grenzen liegt. Bei Dosiervorrichtungen nach dem Stand der Technik, bei welchen die Länge der Dosierrinne zur Anpassung an geometrische Gegebenheiten verändert werden musste, veränderte sich durch die Änderung der Länge auch deren Masse und Schwerpunktlage gegenüber dem Antrieb. Bei Austragsvorrichtungen mit Förderrinnen und Vibrationsantrieb musste daher bei Längenänderung der Förderrinne das gesamte System wieder neu abgestimmt werden, um die Eigenfrequenz wieder in einen bestimmten Bereich zu legen. Demgegenüber weist eine erfindungsgemäße Dosiervorrichtung mit Förderrinne und Vibrationsantrieb trotz variabler Abwurflänge der Dosiervorrichtung immer dieselben funktionsbestimmenden physikalischen Verhältnisse bezüglich des Vibrationsantriebs auf. Die Art des Vibrationsantriebs ist hierbei ebenfalls variabel. Zum Einsatz können Vibrationsantriebe in Form von Magnet-, Pneumatik-, Exzenter- oder Unwuchtantrieben kommen. Je nach Wahl des Vibrationsantriebs ist der mechanische Aufbau der Förderrinne entsprechend anzupassen.

Die Erfindung wird nachfolgend anhand eines Ausführungsbeispiels näher erläutert. Gleichwirkende Elemente sind dabei in den Figuren mit denselben Bezugszeichen gekennzeichnet. Im Einzelnen zeigen dabei
Fig. 1 eine Seitenansicht einer erfindungsgemäßen Dosiervorrichtung in schematischer Darstellung
Fig. 2 schematisch eine Draufsicht auf die Dosiervorrichtung aus Fig. 1
Fig. 3 eine Seitenansicht einer zweiten Ausführungsform der erfindungsgemäßen Dosiervorrichtung mit maximaler Abwurflänge ebenfalls in schematischer Darstellung Fig. 4 eine Seitenansicht der Dosiervorrichtung aus Fig. 3 mit minimaler Abwurflänge

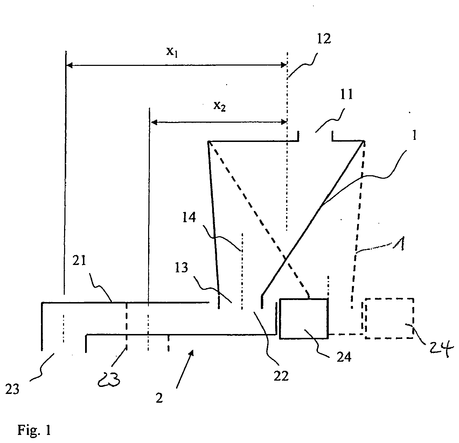

Fig. 1 zeigt eine Seitenansicht einer erfindungsgemäßen Dosiervorrichtung in schematischer Darstellung. Die Dosiervorrichtung weist einen Vorratsbehälter 1 und eine Austragsvorrichtung 2 auf, die eine Fördervorrichtung 21 und einen Antrieb 24 umfasst. Der Vorratsbehälter 1 besitzt eine Mittelachse 12, die lotrecht durch den Mittelpunkt der Behälterebene mit dem größten Querschnitt verläuft. Weiterhin besitzt der Vorratsbehälter 1 an seiner Oberseite eine Einlauföffnung 11 und an seiner Unterseite eine Auslauföffnung 13, die eine Auslaufachse 14 aufweist. Erfindungsgemäß weist die Auslaufachse 14 der Auslauföffnungen 13 einen Abstand B zur lotrechten Mittelachse 12 auf.

Unterhalb der Auslauföffnung 13 des Vorratsbehälters 1 ist die Austragsvorrichtung 2 angeordnet und zwar derart, dass die Auslauföffnung 13 oberhalb der Aufgabestelle 22 der Fördervorrichtung 21 angeordnet ist, so dass der Austrag des Förderguts aus dem Vorratsbehälter 1 in die Fördervorrichtung 21 gewährleitstet ist. Die Fördervorrichtung 21 ist bezüglich ihrer Länge C konstant vorgesehen und durch den Abstand der Aufgabestelle 22 zur Abgabestelle 23 definiert. Aus dem Abstand der Abgabestelle 23 zur lotrechten Mittelachse 12 des Vorratsbehälters 1 ergibt sich somit eine Abwurflänge x1 = C+B für die Dosiervorrichtung.

Im vorliegenden Fall ist der Antrieb 24 der Fördervorrichtung 21 in Verlängerung der Förderrichtung bzw. in Verlängerung einer möglichen Förderrinne, Förderschnecke oder Welle angeordnet und an dieser befestigt. Damit ist die gesamte Austragsvorrichtung 2 an den Vorratsbehälter 1 anhängbar. Gemäß der Erfindung ist die Austragsvorrichtung 2 um die Auslaufachse 14 der Auslauföffnung 13 des Vorratsbehälters 1 verdrehbar angeordnet. Dies kann beispielsweise über lösbare Rohrschellen oder Flansche erfolgen.

Aus der gestrichelten dargestellten Darstellung der Dosiervorrichtung in Fig.1 wird deutlich, welche veränderte Position der Vorratsbehälter 1 und die Austragsvorrichtung 2 durch ihre Verdrehbarkeit einnehmen können. In der gestrichelt dargestellten Position ist die Abwurflänge der Dosiervorrichtung bei gleichbleibenden Komponenten auf den Wert x2 = C-B reduziert. Diese Abwurflänge wird erreicht, indem der Vorratsbehälter 1 zusammen mit der Austragsvorrichtung 2, also die Dosiervorrichtung insgesamt, um 180° um die Mittelachse 12 verdreht und anschließend die Austragsvorrichtung 2 um die Auslaufachse 14 wieder um 180° zurück verdreht wird. Die Position der Einlauföffnung 11 des Vorratsbehälters 1 Ist hiervon unabhängig.

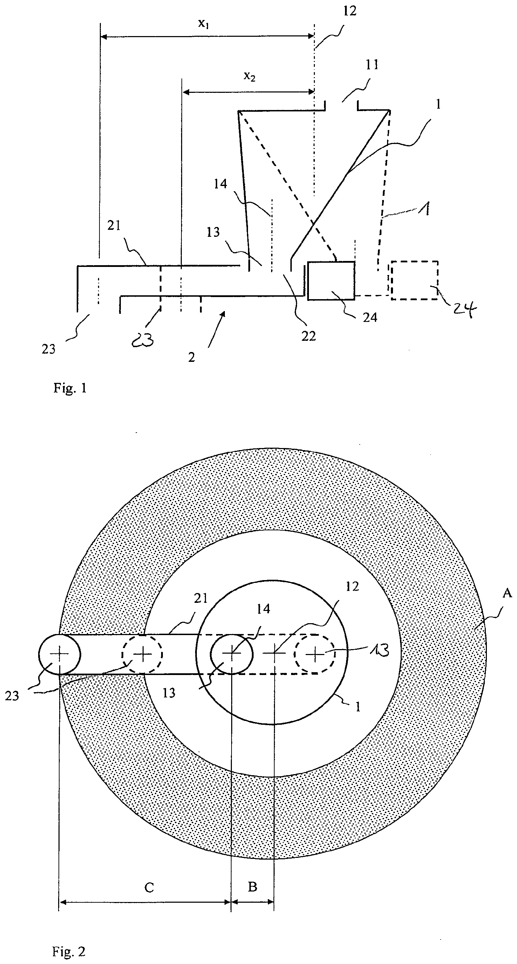

Fig. 2 zeigt eine Draufsicht auf die schematisch dargestellte Dosiervorrichtung aus Fig. 1 . Daraus wird deutlich, dass nicht nur die Abwurflänge x1, x2 der Dosiervorrichtung geändert werden kann, sondern durch Verdrehung der einzelnen Komponenten jede Position der Abgabestelle 23 auf der strukturiert dargestellten Kreisringfläche A realisiert werden kann. Damit wird offensichtlich, wie vielfältig die Variationsmöglichkeiten und die Flexibilität der erfindungsgemäßen Dosiervorrichtung sind.

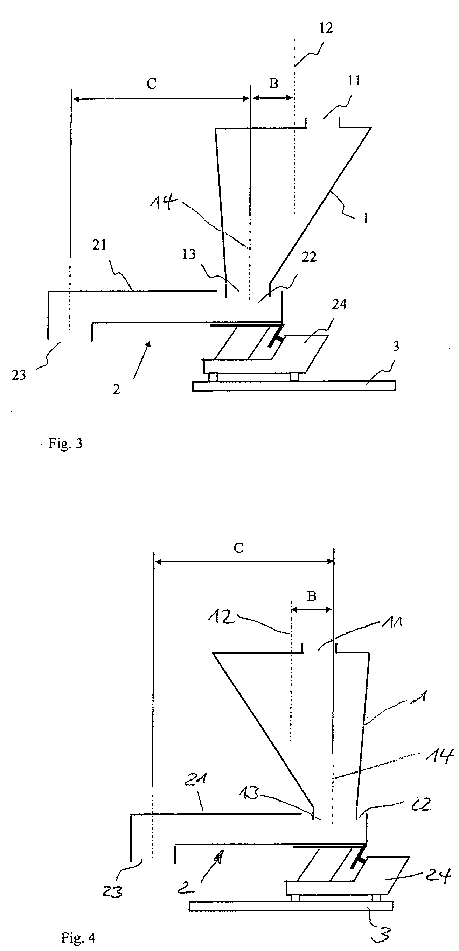

In Fig. 3 ist eine alternative Ausführungsform einer erfindungsgemäßen Dosiervorrichtung dargestellt. Die Austragsvorrichtung 2 ist stehend unterhalb des Vorratsbehälters 1 vorgesehen. Zusätzlich ist sie auf einer Konsole 3 befestigt. Daraus ergeben sich für die konstruktive Lösung der Verdrehbarkeit der Austragsvorrichtung 2 mehrere Varianten. Zum einen kann die Austragsvorrichtung 2 auf der Konsole 3 drehbar befestigt werden oder die Konsole 3 kann gegenüber dem Untergrund, drehbar angeordnet sein. Dies ist jeweils von der Art des Untergrunds oder der Unterkonstruktion der Dosiervorrichtung abhängig. Bei der dargestellten Ausführungsform handelt es sich um eine Dosiervorrichtung mit einer Förderrinne und Vibrationsantrieb, der die Förderrinne in Schwingung versetzt. Hier ist es von Bedeutung, dass sich die Länge der Förderrinne und auch deren Schwerpunktlage bezüglich des Antriebs bei Änderung der Abwurflänge der Dosiervorrichtung nicht ändert, da sonst eine neue Abstimmung des ganzen Systems aus Förderrinne und Antrieb notwendig würde.

In Fig. 3 liegt die Auslauföffnung 13 des Vorratsbehälters 1 mit ihrer gegenüber der Mittelachse 12 exzentrisch angeordneten Auslaufachse 14 entgegen der Förderrichtung der Austragsvorrichtung. In dieser Anordnung stellt sich die Abwurflänge x2 zwischen der Mittelachse 12 und der Auslaufachse 14 mit x2= C-B ein.

In Fig. 4 wurde mit denselben Komponenten eine Abwurflänge x1 = C+ B realisiert, indem zunächst die Dosiervorrichtung insgesamt um 180° verdreht und anschließend die wie bei oben beschriebenen Ausführungsbeispiel die Austragsvorrichtung 2 um die Auslaufachse 14 wiederum um 180 ° verdreht wird. Die Position der Einlauföffnung 11 des Vorratsbehälters 1 Ist hiervon unabhängig.

### Bezugszeichenliste:

1 Vorratsbehälter
11 Einlauföffnung
12 lotrechte Mittelachse
13 Auslauföffnung
14 Auslaufachse
2 Austragsvorrichtung
21 Fördervorrichtung
22 Aufgabestelle
23 Abgabestelle
24 Antrieb
3 Konsole
x1, x2 Abwurflänge (Abstand der Abgabestelle der Austragsvorrichtung zur Mittelachse des Vorratsbehälters)
A Kreisringfläche
B Abstand der Auslaufachse zur Mittelachse des Vorratsbehälters
C Abstand der Aufgabe und Abgabestelle der Fördervorrichtung

## Patentansprüche

1. Dosiervorrichtung mit
- einem Vorratsbehälter (1), der eine Einlauföffnung (11), eine lotrechte Mittelachse (12) und eine Auslauföffnung (13) aufweist, wobei die lotrechte Mittelachse (12) eine Achse ist, die lotrecht durch einen Punkt innerhalb der Querschnittskontur der Vorratsbehältereinlaufebene verläuft,
- einer Austragsvorrichtung (2), die
- - eine Fördervorrichtung (21), die eine Aufgabe- (22) und eine Abgabestelle (23) aufweist, die mit einem Abstand C zueinander angeordnet sind und
- - einem Antrieb (24) für die Fördervorrichtung (21) umfasst,
- wobei die Auslauföffnung (13) des Vorratsbehälters (1) mit der Aufgabestelle (22) der Fördervorrichtung (21) korrespondiert, und
- die Auslauföffnung(13) eine Auslaufachse (14) aufweist, die in einem Abstand B zur Mittelachse (12) des Vorratsbehälters (1) angeordnet ist, und
- die Austragsvorrichtung (2) um die Auslaufachse (14) der Auslauföffnung (13) des Vorratsbehälters (1) verdrehbar vorgesehen ist, so dass die Abgabestelle (23) der Fördervorrichtung (21) in einer Kreisringebene A, die senkrecht zur Mittelachse (12) des Vorratsbehälters (1) verläuft, variabel anordenbar ist,
**dadurch gekennzeichnet, dass** der Vorratsbehälter (1) innerhalb der Dosiervorrichtung um seine Mittelachse (12) verdrehbar angeordnet ist, so dass die Kreisringebene A die Fläche A = π ^{∗} ((C+B)²-(C-B)²), aufweist.

2. Dosiervorrichtung gemäß einem der vorhergehenden Ansprüche, **dadurch gekennzeichnet, dass** die Fördervorrichtung (21) der Austragsvorrichtung (2) als Förderschnecke vorgesehen ist.

3. Dosiervorrichtung gemäß Anspruch 2, **dadurch gekennzeichnet, dass** die Förderschnecke als Einzeldosierschnecke oder Doppeldosierschnecke vorgesehen ist.

4. Dosiervorrichtung gemäß Anspruch 1, **dadurch gekennzeichnet, dass** die Fördervorrichtung (21) der Austragsvorrichtung (2) als Förderrinne und der Antrieb (24) der Austragsvorrichtung (2) als Vibrationsantrieb vorgesehen ist, der die Förderinne in Schwingung versetzt.

5. Dosiervorrichtung gemäß Anspruch 4, **dadurch gekennzeichnet, dass** die Förderrinne bei variabler Abwurflänge x der Dosiervorrichtung bezüglich des Vibrationsantriebs dieselbe Masse und Schwerpunktlage aufweist.

6. Dosiervorrichtung gemäß Anspruch 4 oder 5, **dadurch gekennzeichnet, dass** der Vibrationsantrieb der Austragsvorrichtung (2) als Magnet-, Pneumatik-, Exzenter- oder Unwuchtantrieb vorgesehen ist.

7. Dosiervorrichtung gemäß einem der vorhergehenden Ansprüche, **dadurch gekennzeichnet, dass** die Austragsvorrichtung (2) hängend am Vorratsbehälter (1) angeordnet ist.

8. Dosiervorrichtung gemäß einem der vorhergehenden Ansprüche 1-6, **dadurch gekennzeichnet, dass** die Austragsvorrichtung (2) stehend unterhalb des Vorratsbehälters (1) angeordnet ist.

9. Dosiervorrichtung gemäß einem der vorhergehenden Ansprüche, **dadurch gekennzeichnet, dass** die Austragsvorrichtung (2) auf einer Konsole (3) befestigt ist.

10. Dosiervorrichtung gemäß Anspruch 9, **dadurch gekennzeichnet, dass** die Konsole (3) eine Fläche aufweist, die im Wesentlichen der lotrechten Projektionsfläche des Vorratsbehälters (1) entspricht.

## Claims

1. Metering device having
- a storage container (1) that has an inlet opening (11), a vertical center axis (12), and an outlet opening (13), wherein the vertical center axis (12) is an axis that passes vertically through a point within the cross-sectional contour of the storage container inlet plane,
- a discharge device (2) that comprises
- - a conveying device (21) that has a loading point (22) and a delivery point (23), which are arranged at a distance C from one another, and
- - a drive (24) for the conveying device (21),
- wherein the outlet opening (13) of the storage container (1) corresponds to the loading point (22) of the conveying device (21), and
- the outlet opening (13) has an outlet axis (14), which is located at a distance B from the center axis (12) of the storage container (1), and
- the discharge device (2) is provided such that it can rotate about the outlet axis (14) of the outlet opening (13) of the storage container (1), so that the delivery point (23) of the conveying device (21) can be variably arranged in an annular plane A that is perpendicular to the center axis (12) of the storage container (1), **characterized in that** the storage container (1) is arranged to be rotatable about its center axis (12) within the metering device so that the annular plane A has the area A = π ^{∗} ((C+B)²-(C-B)²).

2. Metering device according to one of the preceding claims, **characterized in that** the conveying device (21) of the discharge device (2) is provided as a screw conveyor.

3. Metering device according to claim 2, **characterized in that** the screw conveyor is provided as a single metering screw or a double metering screw.

4. Metering device according to claim 1, **characterized in that** the conveying device (21) of the discharge device (2) is provided as a conveyor chute, and the drive (24) of the discharge device (2) is provided as a vibratory drive that sets the conveyor chute into vibration.

5. Metering device according to claim 4, **characterized in that** the conveyor chute has the same mass and location of center of gravity relative to the vibratory drive with variable discharge length x of the metering device.

6. Metering device according to claim 4 or 5, **characterized in that** the vibratory drive of the discharge device (2) is provided as a magnetic, pneumatic, eccentric, or unbalance drive.

7. Metering device according to one of the preceding claims, **characterized in that** the discharge device (2) is arranged such that it is suspended from the storage container (1).

8. Metering device according to one of the preceding claims 1 - 6, **characterized in that** the discharge device (2) is arranged to stand beneath the storage container (1).

9. Metering device according to one of the preceding claims, **characterized in that** the discharge device (2) is attached to a bracket (3).

10. Metering device according to claim 9, **characterized in that** the bracket (3) has an area that essentially corresponds to the vertical projection of the area of the storage container (1).

## Revendications

1. Dispositif de dosage avec
- un réservoir (1), qui comprend une ouverture d'entrée (11), un axe central vertical (12) et une ouverture de sortie (13), l'axe central vertical (12) étant un axe qui s'étend verticalement à travers un point à l'intérieur du contour de la section transversale du plan d'entrée du réservoir,
- un dispositif d'évacuation (2) qui comprend
- un dispositif de convoyage (21), qui comprend un point de chargement (22) et un point de déchargement (23), qui sont disposés avec une distance C entre eux et
- un entraînement (24) pour le dispositif de convoyage (21),
- l'ouverture de sortie (13) comprenant un axe de sortie (14) qui est disposé à une distance B de l'axe central (12) du réservoir (1) et
- le dispositif d'évacuation (2) étant conçu de manière rotative autour de l'axe de sortie (14) de l'ouverture de sortie (13) du réservoir (1), de façon à ce que le point de déchargement (23) du dispositif de convoyage (21) puisse être disposé de manière variable dans un plan en forme d'anneau circulaire A qui s'étend perpendiculairement à l'axe central (12) du réservoir (1),
**caractérisé en ce que** le réservoir (1) est disposé à l'intérieur du dispositif de dosage de manière rotative autour de son axe central (12), de façon à ce que le plan en forme d'anneau circulaire A présente la surface A = π ^{∗} ((C+B)² - (C-B)²).

2. Dispositif de dosage selon l'une des revendications précédentes, **caractérisé en ce que** le dispositif de convoyage (21) du dispositif d'évacuation (2) est conçu comme une vis sans fin de convoyage.

3. Dispositif de dosage selon la revendication 2, **caractérisé en ce que** la vis sans fin de convoyage est conçue comme une simple vis sans fin de dosage ou comme une double vis sans fin de dosage.

4. Dispositif de dosage selon la revendication 1, **caractérisé en ce que** le dispositif de convoyage (21) du dispositif d'évacuation (2) est conçu comme une goulotte de convoyage et l'entraînement (24) du dispositif d'évacuation (2) est conçu comme un entraînement à vibrations qui fait vibrer la goulotte de convoyage.

5. Dispositif de dosage selon la revendication 4, **caractérisé en ce que** la goulotte de convoyage présente, dans le cas d'une longueur d'éjection variable x du dispositif de dosage, par rapport à l'entraînement à vibrations, la même masse et la même position du centre de gravité.

6. Dispositif de dosage selon la revendication 4 ou 5, **caractérisé en ce que** l'entraînement à vibrations du dispositif d'évacuation (2) est conçu comme un entraînement magnétique, pneumatique, à excentrique ou à balourd.

7. Dispositif de dosage selon l'une des revendications précédentes, **caractérisé en ce que** le dispositif d'évacuation (2) est disposé de manière suspendue au réservoir (1).

8. Dispositif de dosage selon l'une des revendications précédentes 1 à 6, **caractérisé en ce que** le dispositif d'évacuation (2) est disposé verticalement en dessous du réservoir (1).

9. Dispositif de dosage selon l'une des revendications précédentes, **caractérisé en ce que** le dispositif d'évacuation (2) est fixé sur une console (3).

10. Dispositif de dosage selon la revendication 9, **caractérisé en ce que** la console (3) comprend une surface qui correspond globalement à la surface de projection verticale du réservoir (1).
